# EUROPEAN PATENT APPLICATION

(11) **EP 4 687 131 A1**
(43) Date of publication of application: **04.02.2026**
(21) Application number: 25184445.2
(22) Date of filing: 23.06.2025
(51) Int. Cl.: G08G 5/26, G08G 5/54, G08G 5/55

(54) **AN ON-BOARD MULTI-MODAL RUNWAY INCURSION DETECTION AND ALERTING SYSTEM FOR APPROACH AND LANDING**

(30) Priority: 29.07.2024 US 202418787030
(71) Applicant: The Boeing Company, Arlington, VA 22202 (US)
(72) Inventor: MEDINA, Jose A., Arlington, 22202 (US); SCHWIESOW, Michael Brandon, Arlington, 22202 (US); MARGINEANTU, Dragos Dorin, Arlington, 22202 (US); ERIGNAC, Charles A., Arlington, 22202 (US); CASSIDY, Thomas A., Arlington, 22202 (US); TANE, Zachary Trent, Arlington, 22202 (US); WESSENDORP, Nikhil M., Arlington, 22202 (US); LEE, Joonho, Arlington, 22202 (US)
(74) Representative: Boult Wade Tennant LLP

(57) **Abstract**

An on-board system and method for leveraging multi-modal means of detecting runway incursions to increase aircraft safety, and to provide a necessary enabler for both reduced crew operations and autonomous flights in the future. The system and method detect incursions using visual perception for all types of vehicles and objects that may incur, and an ADS-B for self-reporting vehicles. The system and method fuse prior known information (such as ownship pose and map data) with detections from sensors and other sources. The system actively tracks detections and computes the current and predicted future states to decide if there is an on-going incursion on the runway. The system reports the runway state to the pilots and/or autonomous receivers.

## Description

### FIELD OF THE DISCLOSURE

The present disclosure is directed to airport runway incursion detection.

### BACKGROUND

Of the many phases of flight, the landing phase of flight is one that is not optional. It is a period of high workload for the pilots and high risk for the aircraft. Incursions onto the runway designated for landing are relatively rare. However, the potential consequences when an incursion occurs can be catastrophic. Airport runway incursions are currently primarily addressed by humans such as, for example, but not limited to, pilots and air traffic controllers. Such assessment is made based on, for example, visual cues, radio communications, and situational understanding, and through pilot and air traffic control training, an understanding of when an incursion is occurring. The class of expected objects includes vehicles (including aircraft, rotorcraft, and ground vehicles), humans, and wildlife. Challenges with detecting an incursion include that the assessment has to be done at high speeds, and the environment is dynamic, including a moving detection platform (the aircraft), moving intruders, and changing seasons and airports. In 2021, the FAA reports 1627 runway incursion incidents over 5217 airports in the United States. In the first quarter of 2023, there were seven runway incursions experienced by seven different airlines in the United States.

Existing solutions make use of traffic data from the Automatic Dependent Surveillance-Broadcast (ADS-B) system. Not every vehicle that could create an incursion is able to report its position through ADS-B. The ADS-B system is dependent on existing infrastructure and is an unsecured system that could be subject to erroneous reporting. Other detection systems are ground radar-based, available where the infrastructure is in place.

What is needed is a system and method for automatically detecting a runway incursion in real time and reporting the incursion, and the confidence associated with that incursion, to a flight deck or to some other system responsible for high-level mission and contingency planning. What is further needed is a system and method that can operate in any airport environment, having as little dependence on the environment as is feasible. This includes making use of the environment in its current condition, and hosting such a function onboard the aircraft.

### SUMMARY

Systems and methods in accordance with the present disclosure include detection of an incursion, reporting the probability to a receiver, executing onboard an aircraft, and operating at any airport. In some examples, the system and method are flight deck augmentations. In some other examples, the system and method are components of an autonomous aircraft. The receiver can be, for example, but not limited to, a pilot or a higher level decision making system like a contingency manager or mission manager. The system and method in accordance with the present disclosure provide an onboard system for runway incursion reporting that uses more than one source to establish detections of objects. The system and method enable the automatic detection of potential incursions (those with or without ADS-B reporting) to counteract erroneous self-reported ADS-B tracks. The system and method augment existing flight decks, providing pilots with more situational awareness to reduce the number of near misses or collisions that happen as a result of objects such as, for example, but not limited to, vehicles and aircraft incurring on an active runway assigned for landing. The system and method enable autonomous runway incursion detection and decision making.

Information that is gathered to compute the probability of incursion includes visual sensing/imaging of the airport environment, state information from the ownship (pose, velocities, etc.), and map information from the airport (runway locations and designations). In some configurations, convolutional neural networks and ADS-B are used to detect targets, and sensor fusion enables the use of multiple detection sources. Object tracking and state estimation based on the gathered information are used to compute the probability of incursion that can assist in decision-making and alerting for situational awareness. In some configurations, the system and method can be used on 7-series aircraft or future aircraft. In some configurations, a subset of components of the system may be used. In some configurations, the system can be used by fixed wing aircraft and other vehicles with different landing environments or capabilities, such as, for example, but not limited to, rotorcraft or urban air mobility.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. Some examples include a method for determining possible incursions onto a runway that could affect an aircraft landing on the runway. The method includes determining characteristics of the runway based on data collected from the aircraft and environmental data about the runway. The method also includes determining a focus of incursion detection based on the characteristics and a position of the aircraft. The method also includes selecting priority data from the collected data based on a pre-defined priority scheme, locating objects in the priority data and in self-reported data, and predicting tracks of the objects and probabilities that the predicted tracks are correct. The method also includes providing a state of the runway for landing to a receiver based on the predicted tracks and the probabilities. Some other examples include corresponding computer systems, apparatus, and computer programs recorded on one or more computer storage devices, each configured to perform the actions of the methods.

Some examples may include one or more of the following features. The method where the collected data may include images. The method may include time-synchronizing the collected data, calibrating a sensor that produces the collected data against an inertial measurement unit (IMU) onboard the aircraft, and identifying zones associated with the runway from the runway characteristics. The method may include identifying regions of interest in the collected data that correspond to the runway and the runway zones, cropping the collected data in the regions of interest to create slices, and detecting, by an object detector, the objects in the slices. The method may include determining position data, positional accuracy and uncertainty data, velocity data, and identification data of targets of interest from the self-reported data, fusing the self-reported data with the collected data, and determining an uncertainty associated with the fused data. The method may include tracking the objects, propagating trajectories of the objects, computing predictions of the trajectories and smoothing the predictions. The method may include determining, based on the trajectories and the predictions, a probability of existence for each of the tracks, and determining a confidence decision associated with each of the tracks based at least on the probability of existence. Some examples of the described techniques may include hardware, a method or process, or computer software on a computer-accessible medium.

Some examples include a computer system for determining possible incursions onto a runway that could affect an aircraft landing on the runway. The computer system includes a hardware processor, and a non-volatile storage medium storing instructions that when executed by the hardware processor perform operations may include determining characteristics of the runway based on data collected from the aircraft and environmental data about the runway, determining a focus of incursion detection based on the characteristics and a position of the aircraft, selecting priority data from the collected data based on a pre-defined priority scheme, locating objects in the priority data and in self-reported data, predicting tracks of the objects and probabilities that the predicted tracks are correct, and providing a state of the runway for landing to a receiver based on the predicted tracks and the probabilities. Some other examples include corresponding computer systems, apparatus, and computer programs recorded on one or more computer storage devices, each configured to perform the actions of the methods.

Some examples may include one or more of the following features. The computer system where the collected data may include images. The operations further may include time-synchronizing the collected data, calibrating a sensor that produces the collected data against an IMU onboard the aircraft, identifying zones associated with the runway from the runway characteristics. The operations further may include identifying regions of interest in the collected data that correspond to the runway and the runway zones, cropping the collected data in the regions of interest to create slices, and detecting, by an object detector, the objects in the slices. The operations further may include determining position data, positional accuracy and uncertainty data, velocity data, and identification data of targets of interest from the self-reported data, fusing the self-reported data with the collected data, and determining an uncertainty associated with the fused data. The operations further may include tracking the objects, propagating trajectories of the objects, computing predictions of trajectories, and smoothing the predictions. The operations further may include determining, based on the trajectories and the predictions, a probability of existence for each of the tracks, and determining a confidence decision associated with each of the tracks based at least on the probability of existence. Some examples of the described techniques may include hardware, a method or process, or computer software on a computer-accessible medium.

Some examples include a computer program product for determining possible incursions onto a runway that could affect an aircraft landing on the runway. The computer program product may include instructions that perform operations including determining characteristics of the runway based on data collected from the aircraft and environmental data about the runway, determining a focus of incursion detection based on the characteristics and a position of the aircraft, selecting priority data from the collected data based on a pre-defined priority scheme, locating objects in the priority data and in self-reported data, predicting tracks of the objects and probabilities that the predicted tracks are correct, and providing a state of the runway for landing to a receiver based on the predicted tracks and the probabilities. Some other examples include corresponding computer systems, apparatus, and computer programs recorded on one or more computer storage devices, each configured to perform the actions of the methods.

It is to be understood that both the foregoing general description and the following detailed description are exemplary and explanatory only and are not restrictive of the present teachings, as claimed.

### BRIEF DESCRIPTION OF THE DRAWINGS

The accompanying drawings, which are incorporated in and constitute a part of this specification, illustrate features of the present teachings and together with the description, serve to explain the principles of the present teachings.
FIG. 1 is a schematic block diagram of an architecture of the system in accordance with the present disclosure;
FIG. 2 is a schematic block diagram of vision-based detection components of the system shown in FIG. 1 in accordance with the present disclosure;
FIG. 3A is a pictorial illustration of the geometry of the view from a landing aircraft;
FIG. 3B is a depiction the reprojection process by which a 3D point in an arbitrary reference system, is represented as a 2D point within the image;
FIG. 3C is an image showing an example of a miscalibrated vision system;
FIG. 4A is an illustration of a heat map indicating sections of a runway area and surrounding airport areas that are prioritized for inspection;
FIG. 4B is an example of image slices including object detector inferences with the associated confidence of those inferences;
FIG. 5 is a schematic block diagram of the tracking subsystem component of the architecture of FIG. 1;
FIG. 6 is a pictorial illustration of an ongoing incursion;
FIG. 7 is a pictorial illustration of flight test results of detection outputs;
FIG. 8A is a pictorial illustration of flight test results of tracking outputs;
FIG. 8B is a pictorial illustration of flight test results of tracking outputs based on the current situation as an incurring vehicle and the decision output of the system;
FIG. 9 is a pictorial illustration of flight test results of decision output; and
FIG. 10 is a flowchart of a method for detecting runway incursion in accordance with examples of the present disclosure.

It should be noted that some details of the figures have been simplified and are drawn to facilitate understanding rather than to maintain strict structural accuracy, detail, and scale.

### DESCRIPTION

Reference will now be made in detail to the present teachings, examples of which are illustrated in the accompanying drawings. In the drawings, like reference numerals have been used throughout to designate identical elements. In the following description, reference is made to the accompanying drawings that form a part thereof, and in which is shown by way of illustration specific examples of practicing the present teachings. The following description is, therefore, merely exemplary.

The present disclosure is directed to an automated runway incursion system and method which include, but are not limited to including, four stages -- scene management, detection, tracking, and decision making - enabling real time determination of runway incursion. In addition, the system and method include a novel way to use ADS-B data, fuse sensor data, and calibrate extrinsic camera parameters against inertial measurement unit devices.

The term "runway" is used herein to include a defined area for the landing and takeoff of aircraft, taxiways for ground movement of aircraft/taxiing, and areas such as blast pads and overrun areas. The surface of the runway can be of natural material (such as dirt, water, or ice) or another type of material (such as asphalt or concrete). A runway can include a water surface, a strip for aircraft landing training that is adjacent to a larger runway, a vertiport, or a heliport. Aircraft can include flying vehicles such as, for example, but not limited to including, commercial aircraft, private aircraft, military aircraft, watercraft, and helicopter and vertical take-off and landing aircraft, among other types of flying and hovering vehicles. Runways vary in dimensions, for example, a small runway can be 800 feet (244 m) long and 26 feet (7.9 m) wide, or a large runway can be 40,000 feet (12 km) long and 900 feet (274 m) wide.

Visual runways may or may not have visual markings. Non-precision instrument runways may include visual markings such as centerlines for horizontal position guidance, aiming points for vertical position guidance, and buoys. Precision instrument runways include blast pad and overrun areas, beginning and ending designated space markers, centerlines, aiming points, buoys, and other horizontal and vertical approach guidance fiducials. There are, for example, single runways, parallel runways, intersecting runways, and open-V runways.

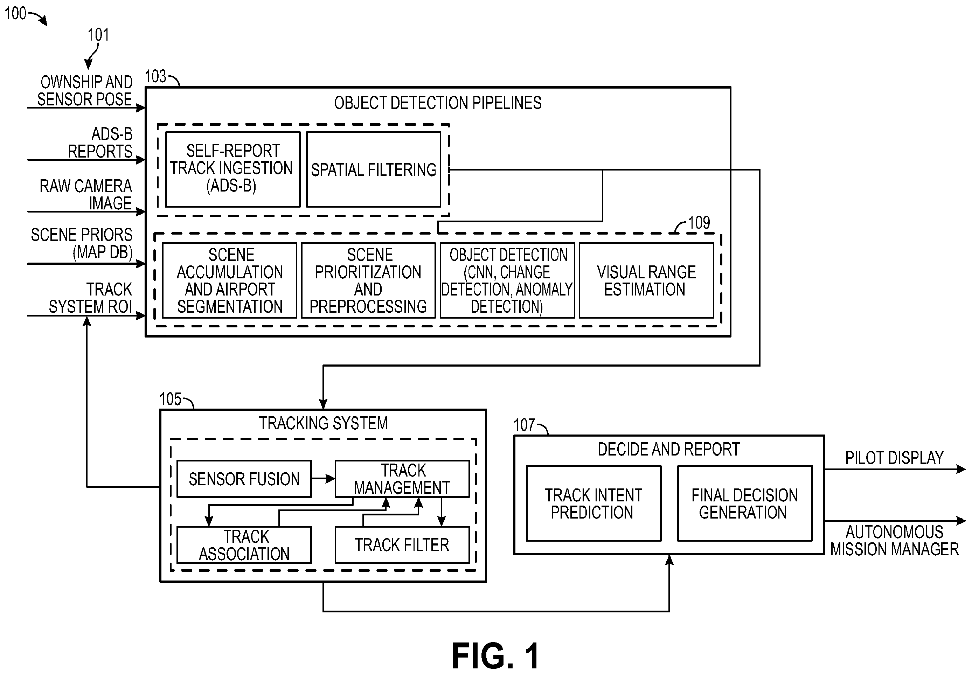

Referring now to FIG. 1, shown is a system architecture. In some configurations, system 100 includes, but is not limited to including, sensor subsystem 101, object detection pipelines 103, a tracking system 105, and a decision and reporting subsystem 107. Data received by sensor subsystem 101 can include, but are not limited to including, ownship and sensor pose data, ADS-B data, camera images and metadata, scene prior data such as map data, and tracking system region of interest data from the tracking system 105. After the data are received, self-reported/ADS-B data are filtered, and, in parallel, visual-only object detection and visual range estimation are done based on the received data. The filtered self-reported data and the object position estimation are provided to the tracking system 105. The tracking system fuses the sensor data and provides that data to a track management component which determines if the fused detection is a new track or an object that has already been established as a track. The tracking component predicts where the track will be at the next timestep and provides this updated track to the scene manager to prioritize for additional detection. The track is provided to the decision and reporting subsystem 107, which reasons about where the track is in relation to the runway and airport. If the track is considered of a high enough confidence, a determination to the track is assigned of incurring or not, and an appropriate output for the receiver is generated. If not enough information is available about the track, the track is assigned a determination of "insufficient evidence" while the system repeats detections to reduce the uncertainty. For example, the output could be directed to a pilot display or to an autonomous mission manager.

Continuing to refer to FIG. 1, in some configurations, vision-type sensor data or matrix-type sensor data, either 2D or 3D, in which an image or radar scan or lidar scan can be described, are received, time synchronized, and calibrated against the aircraft IMU. Using this data, along with navigation data, the location of the runway is determined. Geometry information from navigation data is merged with the visual/matrix data to identify zones of the runway within the reference frame of the sensor of interest, including safety zones. In some configurations, safety zones are determined based on the sum of the width of runway plus one runway width on the side and the end, when the airport has that much width and length.

Objects in the vicinity of the runway are detected and tracked. In some configurations, a Kalman filter-based system is used to track the objects. The system and method take into account that the aircraft collecting the image/navigation data is moving quickly during landing, and the object near the path of the aircraft is also moving. Thus, the aircraft and object positions change every frame. The motion of the aircraft is accounted for in the tracking so that as little bias is introduced in the tracking of the objects. To predict whether the object will be positioned at the next point in time, the trajectory of the object is propagated, and the predictions about where the object will travel are smoothed using, for example, but not limited to, a Gaussian filter.

Continuing to refer to FIG. 1, for an object that is small relative to the aircraft and provides a relatively small number of pixels in an image of the object, which includes the majority of incursion objects, the incoming data are prioritized for further processing which includes staging, detection, and tracking. The object detector is executed for every frame of data in order to provide predictions in real time, however not every pixel of the image is processed to provide predictions. Instead, after the image data are collected and processed, a map service is queried to determine where to focus detection based on the map of the airport, the GPS/IMU orientation of the aircraft, and the location of the already known vehicles and objects within the image. To enable real time incursion detection, incoming data are processed according to a prioritization scheme. In some configurations, objects in the runway safety zone are considered first, then regions of empty space in the part of the runway safety zone that has not been viewed yet, or has not been viewed frequently or recently. The runway safety zone is a space surrounding the runway, typically 500 feet (152 m) wide and extending 1000 feet (305 m) beyond each runway end, that accommodates runway excursion. Next, objects that that are being tracked outside the runway safety zone are considered, and then regions of the image that contain the airport taxi area are inspected. The airport taxi area includes a travel path for aircraft that connects runways with aprons, hangars, terminals, and other facilities.

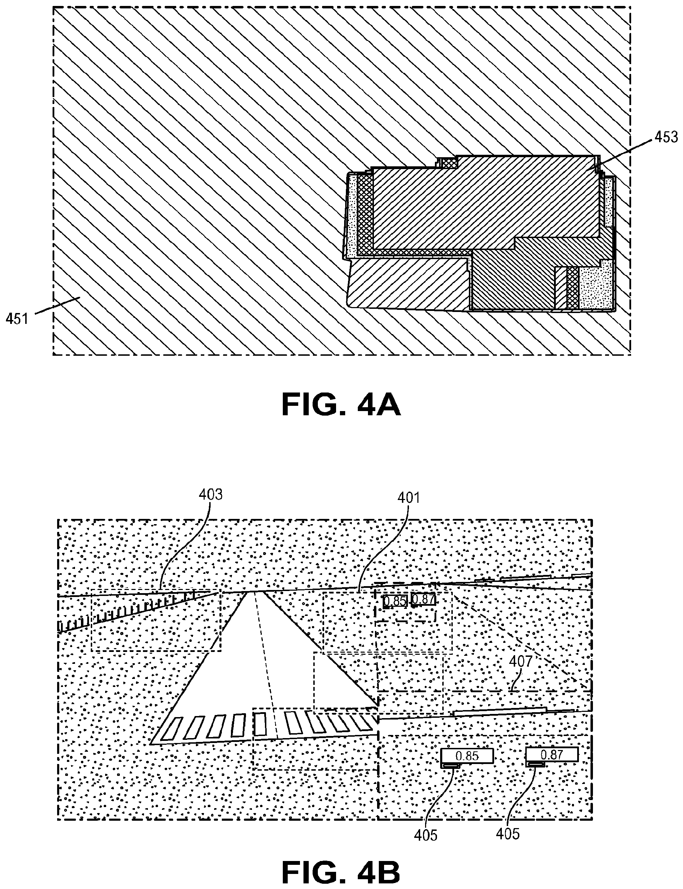

Images that are selected during the prioritization process are cropped to create a slice, for example, 1/30 of the image size, and provided to an object detector, which processes that slice. For example, if four slices are sent, and there are two known objects on the runway, two slices of the image are assigned to detect where those objects are assumed to be as they represent the highest priority. The remaining slices are then tasked with looking at other regions of the runway that have not been searched recently, per the prioritization described herein. A heat map, for example, the heat map of FIG. 4A, indicates how long it has been since a section has been inspected and the objects in the section tracked, and the priority of processing the images associated with the section is possibly modified.

In some configurations, objects can be tracked using techniques such as those described in US Patent # 11,961,274, issued on April 16, 2024, entitled System and Method for Detecting and Tracking an Object. In some configurations, the object type can be determined by machine learning methods. Self-reported information, such as, for example, ADS-B data, includes object detections that are non-regular and there are gaps in time between when the self-reported information arrives and when the next camera image arrives. Not all vehicles are part of the self-reported system, and sometimes self-reporting is disabled during take-off and landing for any number of reasons. The ADS-B signal is self-confirmed. Thus, if the object is detected only by a self-reporting system, it may not be reported as an incursion until it has been confirmed by regular object detection or a safety maneuver is required by the aircraft due to the self-reported object. However, self-reported ADS-B range measurements are more accurate than range measurements based on vision systems alone so fusion of these self-reported measurements is highly desirous once they have been confirmed. Likewise, the aircraft may detect the object, but the self-reporting system may not report the object in which case no fusion takes place but the unfused tracks are reported to the decision system. If the self-reported system and the vision system both detect the object, a confirmation tag is associated with the self-reported object, and the self-reported detections are accepted as long as they remain within the uncertainty bounds of the track. The confirmation tag for the self-reported object can be maintained even if the object isn't detected in each successive frame as long as the track is maintained with a combination of object detection, self-reported detection, or fused detection and the self-reported detections remain within the track uncertainty.

If there is low confidence in the vision data matched with the self-reported data, the confirmation tag is not applied unless successive matched detections increase the confidence level above the required threshold. Tracks updated solely with self-reported detections are only reported by the decision subsystem after the self-reported detection is confirmed by a camera, or when a safety maneuver is required by the location of the self-reported object. In some configurations, a critical situation is based on the altitude the aircraft is flying at and the distance between the aircraft and the tracked object. The critical situation determination, and other criteria-based decisions, can be flexibly determined based on, for example, the criteria described herein.

Continuing to refer to FIG. 1, data from the decision and alerting subsystem 107 can include, but are not limited to including, images and data from the sensors, maps, sounds/haptic feedback, and where a possible incursion is and how it is moving. The data can be provided to, for example, but not limited to, a pilot of the aircraft or a decision support system in an autonomous system. Data provided to a pilot can be of the nature, but not limited to, of alerts, warnings, or highlighting of objects on existing airport map displays and flight deck displays. The same data can be provided in its original form for consumption by other machines which will use the data to determine best course of action in the situation to resolve any potential issue.

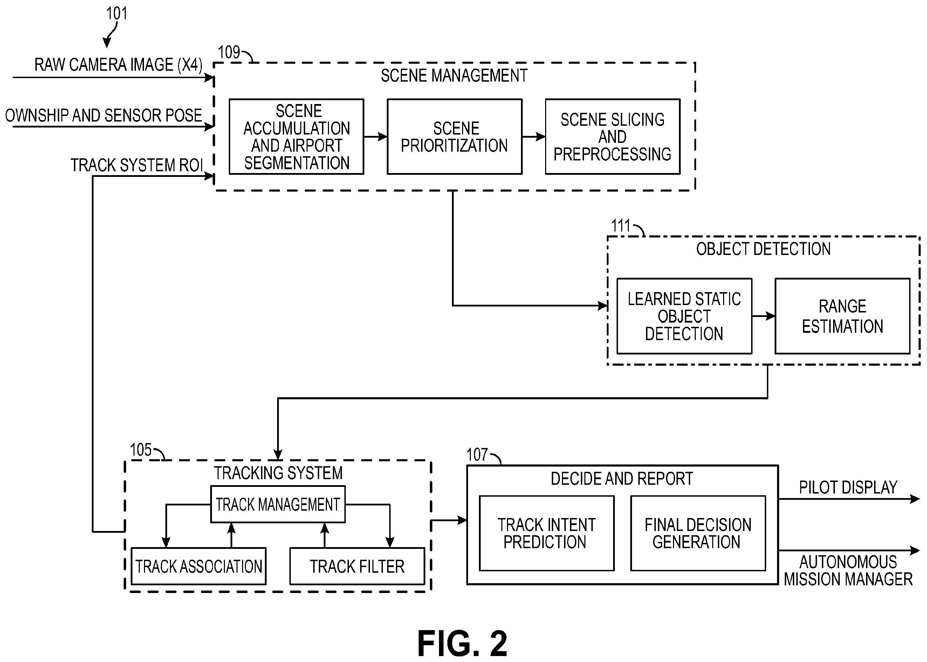

Referring now to FIG. 2, object detections and unfiltered position estimation is provided by the scene management subsystem 109 and the object detection subsystem 111. The scene management subsystem 109 receives camera data, ownship and sensor pose data, and track system region of interest data (from the tracking system 105), and performs scene accumulation, scene prioritization, and scene slicing and preprocessing. Scene accumulation and airport segmentation include collecting and buffering images, tracked objects, camera poses, and intrinsics, and provide an object detector with efficient and resource mindful search parameters. Efficient searches result from reduced overlap, maximum runway coverage, and maximum clustering. Overlap between the slices can affect search efficiency because too much overlap causes redundant searching. Efficient searching enables maintaining coordination between object detection and the sensor update rate. The object detection subsystem 111 performs trained static object detection and range estimation. Although the object exists in a 3-dimensional world, range estimation can be approximated by assuming a distance from a 2-dimensional image because most objects are ground-based.

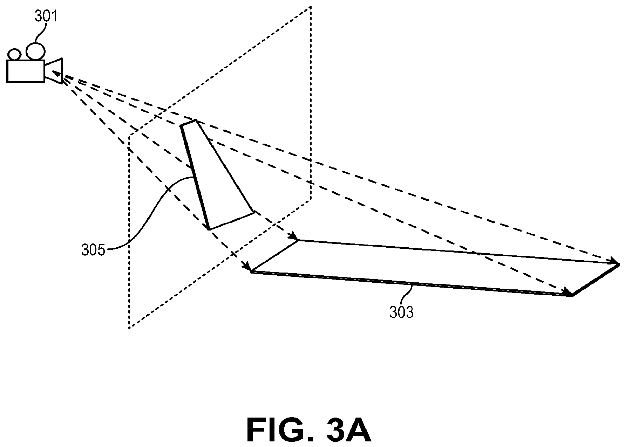

Referring now to FIG. 3A, the camera's pose 301, i.e. the camera position and orientation relative to the runway, provides information about the runway 303 and the projection 305 of the runway in the image plane. The goal is to focus the object detector's attention to relevant airport zones by using self-state and airport maps and highlighting regions of interest such as runways, taxiways, and other zones of interest.

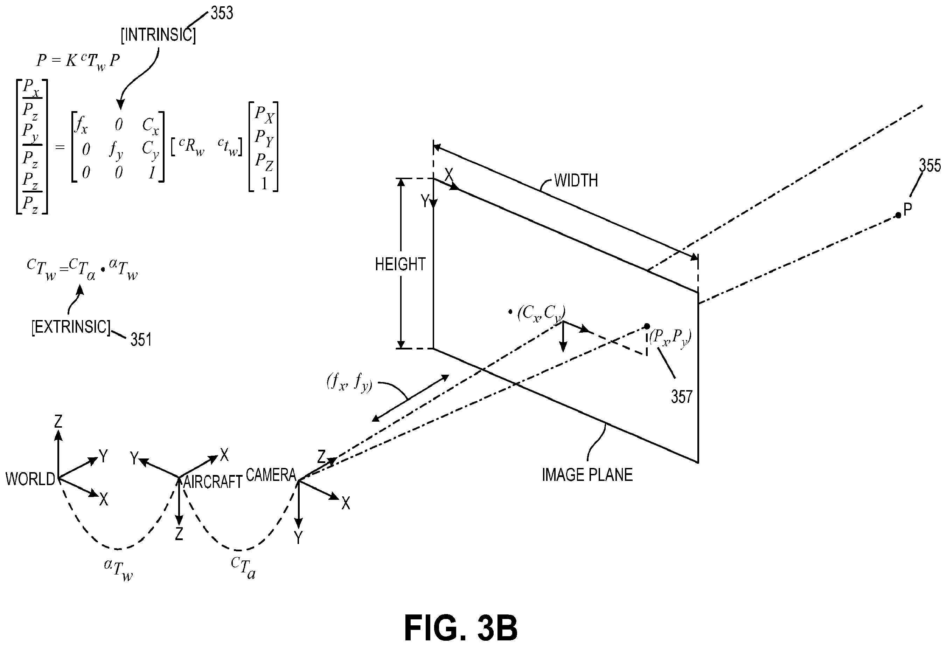

Referring now to FIG. 3B, for systems that rely on visual perception, for example, concerning localization/mapping of either the camera, objects or the environment, calibration of the camera is performed. When calibration parameters drift in time, calibration parameters can be optimized during operation through the methods presented herein. Parameters that represent the physical characteristics of the camera can include, but are not limited to including, focal lengths and centers of projection, parameters defining how the light gets distorted through the lens, and a transform to align the focal plane of two stereo cameras. Calibration can be extrinsic and/or intrinsic. Extrinsic calibration 351 refers to the pose (position and orientation) of the camera with respect to a robot base. Intrinsic calibration 353 refers to the physical characteristics of the camera sensor and lens configuration. Calibration enables the projection of a point P 355 in 3D space into the 2D image frame, given a camera pose T (reliant on extrinsic calibration) and intrinsic calibration parameters K. A point in the image plane p 357 can be reprojected into 3D space as a vector, given a calibration.

Runway features, also known as keypoints in the image plane, can be determined, and pose inference and localization can be performed, along with certainty and covariance determination, for a filtered navigation solution. Simultaneous localization and mapping (SLAM) systems detect arbitrary features, and simultaneously map these features in a new environment while localizing the aircraft within that environment. SLAM uses bundle adjustment optimization to optimize these parameters, and calibration parameters can be among them. SLAM can use custom features as anchoring points since their surveyed locations within the map are known. Methods that utilize feature detection can be used for numerous purposes such as camera pose estimation or mapping, and they can be used to perform an iterative camera calibration optimization, which aims to align the known or estimated 3D locations of the keypoints projected into the image with the corresponding observed points in the image. If a pose of the aircraft from its own INS system (GPS and IMU) is known, this pose can be fixed in the bundle adjustment optimization, and the aircraft-to-camera pose (extrinsic calibration) can be considered. In some configurations, the optimization process can omit consideration of the translational component of the extrinsic calibration. Depending on the use case for the calibration, further simplifications can be made.

It can be assumed that these do not affect the projection significantly or change much over time. For example, when three rotational parameters and four projection parameters remain to be optimized, the detected keypoints, ground truth keypoint locations (or in the case of SLAM, estimated keypoint locations), aircraft pose and priors for the calibration parameters, are used to build a factor graph which links the parameters together and sets their covariance according to a certainty in which the value is known. For example, to fix the aircraft pose and calibration parameters that are ignored, and set their covariances to zero (such that the optimization will not alter them), depending on the features, their location covariance is set as follows: for keypoints, the surveyed location is known and the covariances are set to zero; for mapped points from SLAM, their covariance is set by the SLAM system. The optimization calibration parameters' covariances are set to appropriate non-zero values according to the certainty of their prior values (this can be estimated from the reprojection error before calibration and adding margins). Additionally, the detected keypoint covariances are set according to the respective detector confidence and accuracy to account for their uncertainties. A Levenberg-Marquardt algorithm can be used, for example, to optimize the factor graph (bundle adjustment). The average reprojection error with the prior calibration parameters can be computed and they can be compared to the optimized calibration parameters to verify that projection improves. Covariance of the parameters can be computed. The parameters and their associated covariance can be used by other systems and their own uncertainty quantifications. This optimization can be done continuously throughout one/multiple approach(es), cumulatively collecting data, and updating the calibration parameters every so often for a more optimal calibration.

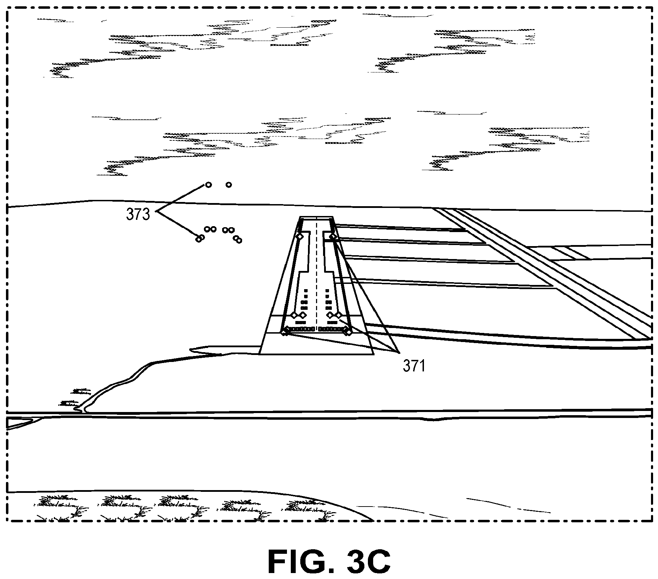

Referring now to FIG. 3C, shown is an illustration of the intrinsic and extrinsic calibration effect. The dots 371 are the expected and correct position of known features on the runway. The dots 373 represent where the system thinks the features should be prior to calibration. These are the types of errors that are being corrected by a system and method in accordance with the present disclosure.

Referring now to FIG. 4A, shown is an image "heat map" of viewed portions of an image over time. Such a heat map can be used in scene prioritization, i.e. to determine which area to check next. For example, areas 451 of the heat map have not been searched recently, while areas 453 have been recently searched. Scene prioritization includes, but is not limited to including, slicing the image into fixed sizes expected by the object detector, and ranking the slice priority based on unsearched runway segments, established tracks, airport segmentation, and time since last viewed. Scene prioritization places increased attention on safety critical regions (e.g. tracked objects on the runway). Scene assignment normalizes and reshapes data to match the input form for detector methods, and tasks appropriate detectors and aggregates their inferences.

Referring to FIG. 4B, shown are two image slices 401/403 with object detector inferences 405 in zoomed cropped area 407 where the objects are located. The shown image slices 401 and 403 are assigned to detectors. In image slice 401, the probabilities are 0.85 and 0.87 that two separate objects are located at a pixel in a bounding box as shown. The probability computation takes into account slice overlap so that one object is detected, not two, if the object is in an overlap area. The heat map reflects that the slice 401 has been searched recently, just after the search locates a possible object, and changes over time unless the image slice 401 is rechecked. Objects can be in slices that are recently searched or not. After taking slices, the focus is on the runway area, then the focus is on recency of the search.

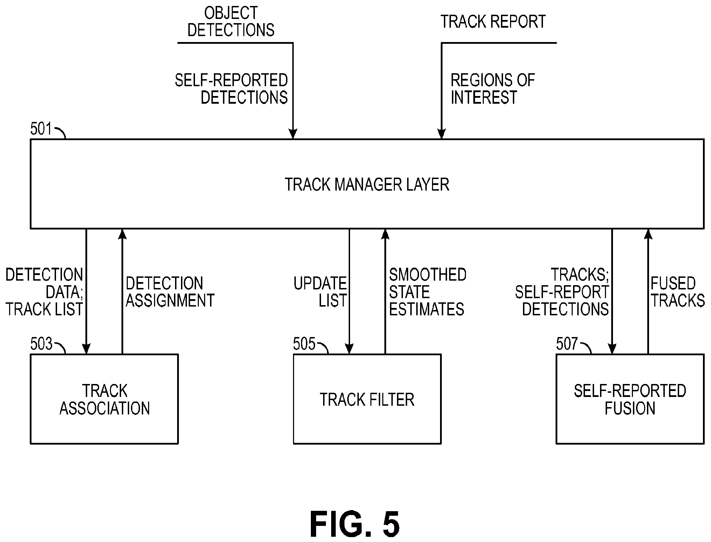

Referring now to FIG. 5, tracking system 105 integrates multiple detections to maximize the accuracy of incursion prediction. The track manager layer 501 maintains an internal track database, coordinates between internal system components, and provides an access layer for external system modules. Object state measurements are inputs to the track manager layer 501 from an object detection subsystem 111 (FIG. 2) and from any self-reported sources. This information is marshalled and passed to the internal track association subsystem 503, track filter subsystem 505, and fusion components 507. A track report and the regions of interest are outputs from the track manager layer 501. The track report is sent to a decision and alerting subsystem 107 (FIG. 2) while the regions of interest form a feedback loop to the scene management subsystem 109 (FIG. 2). The track association subsystem 503 gates object detections to existing tracks, i.e. if an object is detected close to where it is expected to be, the track and object are considered for association with each other. When multiple objects gate to the same track, the final association matrix is determined by using an auction-based approach where the price of each gated detection is computed from the Mahalanobis distance to each candidate track and the candidate tracks bid on the available detections until each has been assigned. Inputs to the track association subsystem 503 from the track manager layer 501 include object detection data and a list of the tracks of the objects, and outputs to the track manager layer 501 include object detection assignment. Object detection assignment is when an object is assigned to an existing track. If there is no existing track, the object is put into a probationary state awaiting new data, and is given a new track ID. When tracks are present but there are no objects detected in a camera frame or none of the objects associate a specific track, the uncertainty of that tracked object increases. If there are no objects associated with a specific track for more than a threshold amount of time, or if the uncertainty of the track increases beyond a pre-selected threshold, the track id dropped. The track filter subsystem 505 increases accuracy of the object state estimate by blending sensor measurements with the predicted future object motion. Inputs to the track filter subsystem 505 from the track manager layer 501 include a list of all object detections that are associated with an existing track and the tracks to update with each associated detection. The outputs to the track manager layer 501 include smoothed state estimates for each tracked object.

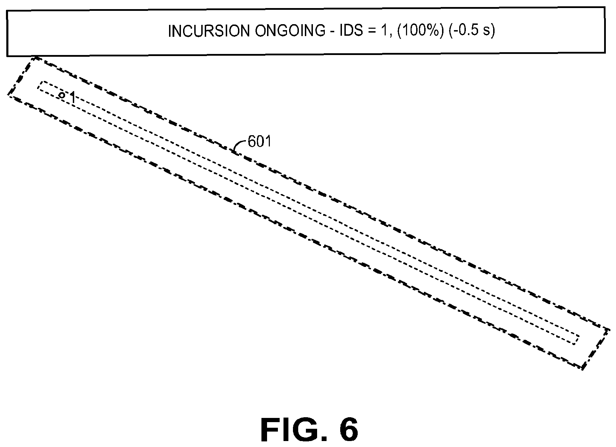

Referring now to FIG. 6, shown is a track 601 of a potential incursion and an exemplary notification with the details of the incursion. In the shown potential incursion, caused by the track with identification number of 1, 100% of the runway has been scanned for false negatives, and the potential incursion information is valid as of half a second ago. In a probabilistic decision strategy, requirements for the probability of a false negative and the probability of false positive drive system parameters. Data that assist in determining false negatives and false positives include the number of looks at empty space before declaring clear, the number of track updates before declaring an incursion, the number of missed updates before a track is dropped, and the track initialization strategy. In some configurations, possible runway states include insufficient evidence, which means additional data are required before making a confident decision, incursion ongoing in which a confident track has been found in the incursion zone, and runway clear in which the tracking system has a high level of confidence that the incursion zone is free of obstructions.

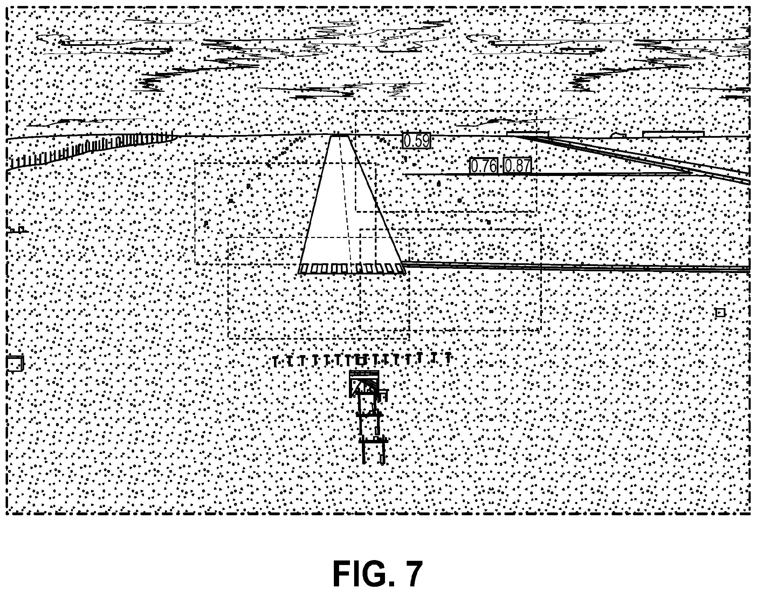

Referring now to FIG. 7, shown are flight test results of detection outputs in which slices overlap.

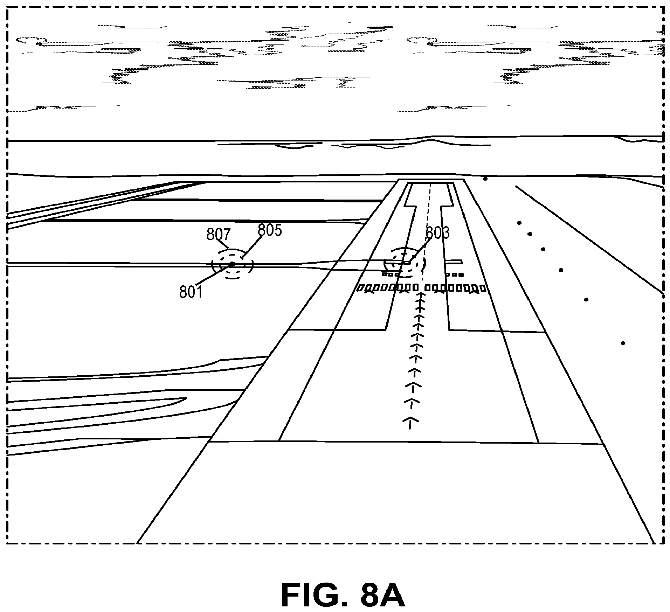

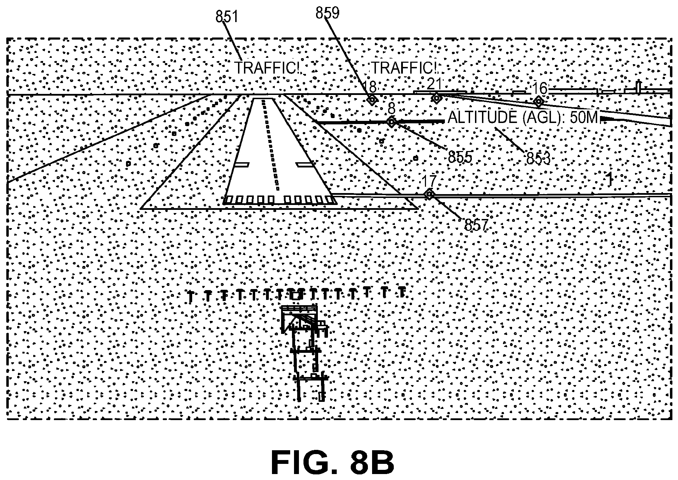

Referring now to FIGs. 8A and 8B, shown are flight test results of tracked objects. Whereas other views are detections in frame by frame data, shown in FIG. 8A are tracks and objects. The tracked objects, indicated by outer circles 807, have been seen multiple times previous to this image. The image is an aggregate of multiple detections over time. The central dot 801 within the outer circle 807 is the current track state estimate and a velocity vector 803 extending from the central dot 801 points to where the object is expected to move, and the length of the vector gives an indication of the current object speed. The inner circle 805 indicates a detection at a specific time associated with the tracked object of the outer circle 807.

Referring now to FIG. 8B, shown is an aggregate of multiple sources of information including annunciation words 851 at the top indicating runway status, object tracks, and current altitude. The altitude 853 indicates the altitude above ground level in meters, for example. Altitude above ground level is used to determine when an incursion decision should be made. The diamonds 855 represent tracks of an object that has been detected enough times to be considered a confident track. The diamond 857 is a track which is also considered a confident track, and it is being distinguished to signify that it is currently incurring on the runway designated for landing even if it is only on the edge. The line 859 with its origin centered in the diamond represents the direction of speed of the object. The magnitude of the line represents the magnitude of the object's speed. The annunciation words 851, in this case "TRAFFIC! TRAFFIC!", indicate that there is a vehicle in the track that is currently causing an incursion. The annunciation words 851 convey the current runway status, whether clear, incurred, or if there is insufficient evidence of either decision.

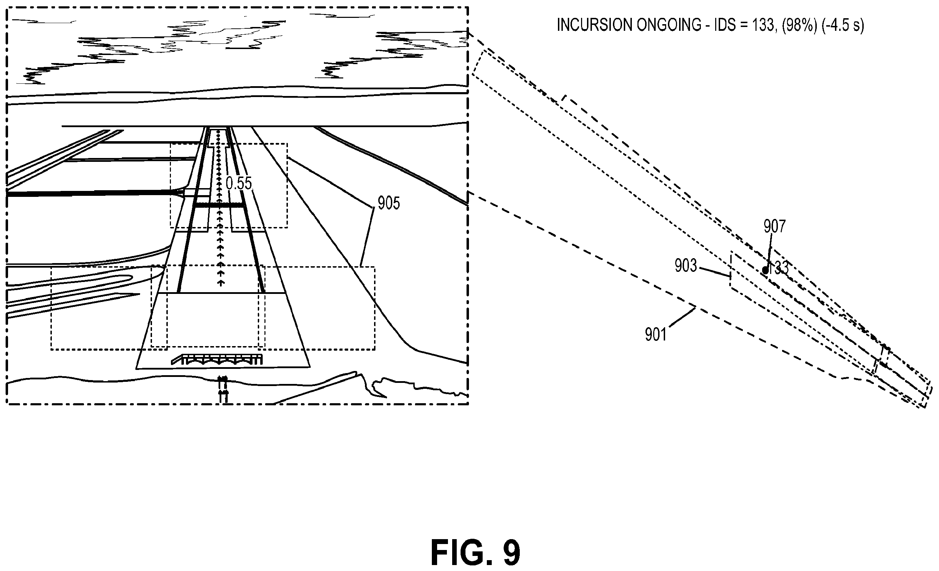

Referring now to FIG. 9, shown is a side-by-side view for situational awareness evaluation during flight testing. The left side is the live camera view with slices and detections overlaid. The banner provides the identification of the object, the percentage of the runway safety area (RSA) that has been scanned a pre-selected number of times, and the lag behind the current time. The rectangles illustrate the object in the context of the scan area. Box 901 is the region that has been scanned a pre-selected number of times. Boxes 903 are projections of boxes 905 into a two dimensional top-down view of slices. Point 907 is the object causing possible incursion. For objects that are being tracked but are not expected to cause incursion, a different graphic can be used to distinguish them from incurring objects.

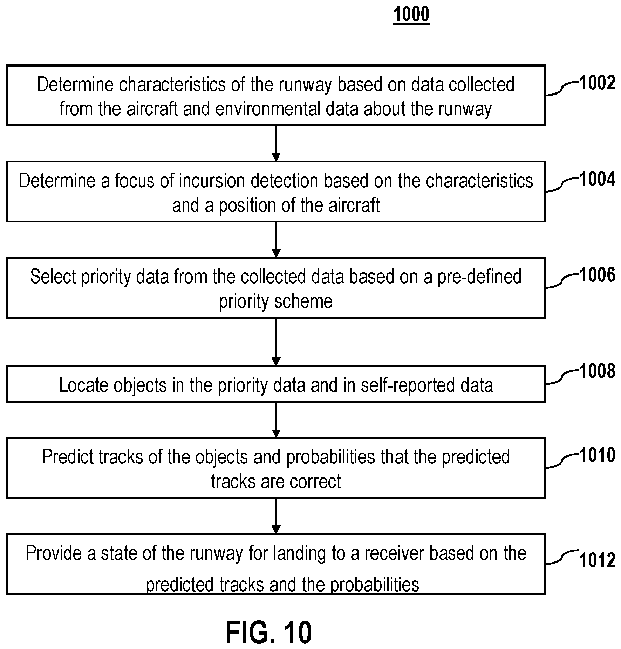

Referring now to FIG. 10, method 1000 for determining possible incursions onto a runway that could affect an aircraft landing on the runway includes, but is not limited to including, determining 1002 characteristics of the runway based on data collected from the aircraft and environmental data about the runway, determining 1004 a focus of incursion detection based on the characteristics and a position of the aircraft, selecting 1006 priority data from the collected data based on a pre-defined priority scheme, locating 1008 objects in the priority data and in self-reported data, predicting 1010 track of the objects and a probabilities that the predicted tracks are correct, and providing 1012 a state of the runway for landing to a receiver based on the predicted tracks and the probabilities.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

While the present teachings have been illustrated with respect to one or more examples, alterations and/or modifications can be made to the illustrated examples without departing from the scope of the appended claims. In addition, while a particular feature of the present teachings may have been disclosed with respect to only one of several examples, such feature may be combined with one or more other features of the other examples as may be desired and advantageous for any given or particular function. As used herein, the terms "a", "an", and "the" may refer to one or more elements or parts of elements. As used herein, the terms "first" and "second" may refer to two different elements or parts of elements. As used herein, the term "at least one of A and B" with respect to a listing of items such as, for example, A and B, means A alone, B alone, or A and B. Those skilled in the art will recognize that these and other variations are possible. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in nonconformance of the process or structure to the intended purpose described herein. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompasses by the following claims.

The following clauses present further examples:
Clause 1. A method (1000) for determining possible incursions onto a runway (303) that could affect an aircraft landing on the runway (303) comprising:
   determining (1002) characteristics of the runway (303), wherein the characteristics are based on data collected from the aircraft and environmental data about the runway (303);
   selecting (1006) priority data from the collected data based on a pre-defined priority scheme;
   locating (1008) objects in the priority data and in self-reported data;
   predicting (1010) tracks of the objects and probabilities that the predicted tracks are correct; and
   providing (1012) a state of the runway (303) for landing to a receiver based on the predicted tracks and the probabilities; and optionally,
   determining (1004) a focus of incursion detection based on the characteristics and a position of the aircraft.
Clause 2. The method (1000) of Clause 1, wherein the collected data comprise:
   images.
Clause 3. The method (1000) of Clause 1 or Clause 2, further comprising:
   time-synchronizing the collected data.
Clause 4. The method (1000) of any preceding Clause, further comprising:
   calibrating a sensor that produces the collected data against an inertial measurement unit (IMU) onboard the aircraft.
Clause 5. The method (1000) of any preceding Clause, further comprising:
   identifying zones associated with the runway (303) from the runway (303) characteristics.
Clause 6. The method (1000) of Clause 5, further comprising:
   identifying regions of interest in the collected data that correspond to the runway (303) and the runway (303) zones;
   cropping the collected data in the regions of interest to create slices; and
   detecting, by an object detector, the objects in the slices.
Clause 7. The method (1000) of any preceding Clause, further comprising:
   determining position data, positional accuracy and uncertainty data, velocity data, and identification data of targets of interest from the self-reported data;
   fusing the self-reported data with the collected data; and
   determining an uncertainty associated with the fused data.
Clause 8. The method (1000) of any preceding Clause, further comprising:
   tracking the objects;
   propagating trajectories of the objects;
   computing predictions of the trajectories; and
   smoothing the predictions.
Clause 9. The method (1000) of Clause 8, further comprising:
   determining, based on the trajectories and the predictions, a probability of existence for each of the tracks; and
   determining a confidence decision associated with each of the tracks based at least on the probability of existence.
Clause 10. A computer system (100) for determining possible incursions onto a runway (303) that could affect an aircraft landing on the runway (303) comprising:
   a hardware processor; and
   a non-volatile storage medium storing instructions that when executed by the hardware processor perform operations comprising:
      determining (1002) characteristics of the runway (303), wherein the characteristics are based on data collected from the aircraft and environmental data about the runway (303);
      determining (1004) a focus of incursion detection based on the characteristics and a position of the aircraft;
      selecting (1006) priority data from the collected data based on a pre-defined priority scheme;
      locating (1008) objects in the priority data and in self-reported data;
      predicting (1010) tracks of the objects and probabilities that the predicted tracks are correct; and
      providing (1012) a state of the runway (303) for landing to a receiver based on the predicted tracks and the probabilities.
Clause 11. The computer system (100) of Clause 10, wherein the collected data comprise:
   images.
Clause 12. The computer system (100) of Clause 10 or Clause 11, wherein the operations further comprise:
   time-synchronizing the collected data.
Clause 13. The computer system (100) of any of Clauses 10 - 12, wherein the operations further comprise:
   calibrating a sensor that produces the collected data against an inertial measurement unit (IMU) onboard the aircraft.
Clause 14. The computer system (100) of any of Clauses 10 - 13, wherein the operations further comprise:
   identifying zones associated with the runway (303) from the runway (303) characteristics.
Clause 15. The computer system (100) of Clause 14, wherein the operations further comprise:
   identifying regions of interest in the collected data that correspond to the runway (303) and the runway (303) zones;
   cropping the collected data in the regions of interest to create slices; and
   detecting, by an object detector, the objects in the slices.
Clause 16. The computer system (100) of any of Clauses 10 - 15, wherein the operations further comprise:
   determining position data, positional accuracy and uncertainty data, velocity data, and identification data of targets of interest from the self-reported data;
   fusing the self-reported data with the collected data; and
   determining an uncertainty associated with the fused data.
Clause 17. The computer system (100) of any of Clauses 10 - 16, wherein the operations further comprise:
   tracking the objects;
   propagating trajectories of the objects;
   computing predictions of trajectories; and
   smoothing the predictions.
Clause 18. The computer system (100) of Clause 17, wherein the operations further comprise:
   determining, based on the trajectories and the predictions, a probability of existence for each of the tracks; and
   determining a confidence decision associated with each of the tracks based at least on the probability of existence.
Clause 19. A computer program product for determining possible incursions onto a runway (303) that could affect an aircraft landing on the runway (303) comprising, the computer program product comprising a computer readable storage medium having program instructions embodied therewith, the program instructions executable by a computing device to cause the computing device to perform operations comprising:
   determining (1002) characteristics of the runway (303), wherein the characteristics are based on data collected from the aircraft and environmental data about the runway (303);
   determining (1004) a focus of incursion detection based on the characteristics and a position of the aircraft;
   selecting (1006) priority data from the collected data based on a pre-defined priority scheme;
   locating (1008) objects in the priority data and in self-reported data;
   predicting (1010) tracks of the objects and probabilities that the predicted tracks are correct; and
   providing (1012) a state of the runway (303) for landing to a receiver based on the predicted tracks and the probabilities.
Clause 20. The computer program product of Clause 19, wherein the collected data comprise:
   vision-based or matrix-based data.

## Claims

1. A method (1000) for determining possible incursions onto a runway (303) that could affect an aircraft landing on the runway (303), the method comprising:
determining (1002) characteristics of the runway (303), wherein the characteristics are based on data collected from the aircraft and environmental data about the runway (303);
selecting (1006) priority data from the collected data based on a pre-defined priority scheme;
locating (1008) objects in the priority data and in self-reported data;
predicting (1010) tracks of the objects and probabilities that the predicted tracks are correct; and
providing (1012) a state of the runway (303) for landing to a receiver based on the predicted tracks and the probabilities.

2. The method (1000) of claim 1, wherein the collected data comprise:
images.

3. The method (1000) of claim 1 or claim 2, further comprising:
time-synchronizing the collected data.

4. The method (1000) of any preceding claim, further comprising:
calibrating a sensor that produces the collected data against an inertial measurement unit onboard the aircraft.

5. The method (1000) of any preceding claim, further comprising:
identifying zones associated with the runway (303) from the runway (303) characteristics.

6. The method (1000) of claim 5, further comprising:
identifying regions of interest in the collected data that correspond to the runway (303) and the runway (303) zones;
cropping the collected data in the regions of interest to create slices; and
detecting, by an object detector, the objects in the slices.

7. The method (1000) of any preceding claim, further comprising:
determining position data, positional accuracy and uncertainty data, velocity data, and identification data of targets of interest from the self-reported data;
fusing the self-reported data with the collected data; and
determining an uncertainty associated with the fused data.

8. The method (1000) of any preceding claim, wherein the collected data comprise:
vision-based or matrix-based data.

9. The method (1000) of any preceding claim, further comprising:
tracking the objects;
propagating trajectories of the objects;
computing predictions of the trajectories; and
smoothing the predictions.

10. The method (1000) of claim 9, wherein smoothing the predictions comprises smoothing the predictions using a Gaussian filter.

11. The method (1000) of claim 9 or claim 10, further comprising:
determining, based on the trajectories and the predictions, a probability of existence for each of the tracks; and
determining a confidence decision associated with each of the tracks based at least on the probability of existence.

12. The method of any preceding claim, wherein the method is a computer implemented method.

13. A computer system (100) for determining possible incursions onto a runway (303) that could affect an aircraft landing on the runway (303) comprising:
a hardware processor; and
a non-volatile storage medium storing instructions that when executed by the hardware processor perform the method of any preceding claim.

14. A computer program product for determining possible incursions onto a runway (303) that could affect an aircraft landing on the runway (303), the computer program product comprising a computer readable storage medium having program instructions embodied therewith, the program instructions executable by a computing device to cause the computing device to perform the method of any of claims 1 - 12.

15. A computer-readable storage medium for determining possible incursions onto a runway (303) that could affect an aircraft landing on the runway (303), the computer-readable storage medium comprising program instructions which, when executed by a computing device, cause the computing device to carry out the method of any of claims 1 - 12.
